# EUROPEAN PATENT APPLICATION

(11) **EP 4 131 206 A1**
(43) Date of publication of application: **08.02.2023**
(21) Application number: 21774618.9
(22) Date of filing: 11.02.2021
(51) Int. Cl.: G08G 1/01, G01C 15/00, G01C 15/06, G08G 1/04

(54) **VEHICLE-POSITION IDENTIFICATION SYSTEM AND VEHICLE-POSITION IDENTIFICATION DEVICE**

(30) Priority: 25.03.2020 JP 2020054412
(71) Applicant: Robert Bosch GmbH, 70442 Stuttgart (DE)
(72) Inventor: YAMAMOTO Sho, Tokyo 150-8360 (JP); ASO Masaya, Tokyo 150-8360 (JP); MACHIDA Nobuhiro, Tokyo 150-8360 (JP); HANO Sunao, Tokyo 150-8360 (JP); SEGAWA Taro, Tokyo 150-8360 (JP)
(74) Representative: Isarpatent
(86) International application number: PCT/JP2021/005123
(87) International publication number: WO 2021/192701

(57) **Abstract**

The present invention provides a vehicle locating system and a vehicle locating device capable of reducing a risk that, when it is attempted to identify a location of a vehicle as a detection target by using a device on the outside of the vehicle, the vehicle cannot be detected due to overlap of the vehicle and another vehicle or an obstacle located in front when seen from a detector.

A vehicle locating system (1) includes: a portion (21) to be detected that is provided to a vehicle (20) and extends upward to a height at least exceeding a roof top; a detector (5) that detects the portion (21) to be detected; and a vehicle locating device (50) that identifies a location of the vehicle (20) on map data on the basis of detection information on the detected portion (21) to be detected.

## Description

### Technical Field

The present invention relates to a vehicle locating system and a vehicle locating device.

### Background Art

In recent years, a system that guides a vehicle to a specified location by a device on the outside of the vehicle has been proposed. For example, the following guiding method is disclosed in PTL 1. The guiding method includes: a step of identifying a trajectory from a start location to a target location in a parking lot, the trajectory being identified on the outside of an automobile; a step of sending at least one partial section of this trajectory to the automobile via a communication network; and a step of monitoring this automobile for departure from the section by using a monitoring system on the outside of the automobile during autonomous travel following the section, and the trajectory is identified depending on an attribute of the automobile. The technique disclosed in PTL 1 is applied to an automatic parking system, for example.

### Citation List

### Patent Literature

PTL 1: JP-A-2018-508082

### Summary of Invention

### Technical Problem

In the guiding method described in PTL 1, it is important to detect at least a location of a vehicle as a guiding target with a high degree of accuracy. However, in the case where equipment on the outside of the vehicle is used to detect the location of the vehicle or the like, the vehicle possibly overlaps another vehicle, an obstacle, or the like while locating behind the other vehicle, the obstacle, or the like, which hinders detection of the vehicle. The identification of the location by using a satellite signal from the Global Positioning System (GPS) still has a measurement error of several meters to several tens of meters. Thus, a system capable of detecting the location of the vehicle with the high degree of accuracy is desired.

The present invention has been made in view of the above problem and therefore has a purpose of providing a vehicle locating system and a vehicle locating device capable of reducing a risk that, when it is attempted to identify a location of a vehicle as a detection target by using a device on the outside of the vehicle, the vehicle cannot be detected due to overlap of the vehicle and another vehicle or an obstacle located in front when seen from a detector.

### Solution to Problem

According to one aspect of the present invention, a vehicle locating system is provided. The vehicle locating system includes: a portion to be detected that is provided to a vehicle and extends upward to a height at least exceeding a roof top; a detector that detects the portion to be detected; and a vehicle locating device that identifies a location of the vehicle on map data on the basis of detection information on the detected portion to be detected.

According to another aspect of the present invention, a vehicle locating device is provided. The vehicle locating device includes a detection information processing section that identifies a location of a vehicle on map data on the basis of detection information acquired by detecting a portion to be detected that is provided to the vehicle and extends upward to a height at least exceeding a roof top.

### Advantageous Effects of Invention

As it has been described so far, according to the present invention, it is possible to reduce a risk that, when it is attempted to identify the location of the vehicle as a detection target by using the device on the outside of the vehicle, the vehicle cannot be detected due to overlap of the vehicle and another vehicle or an obstacle located in front when seen from the detector.

### Brief Description of Drawings

Fig. 1 is a schematic view illustrating a basic configuration example of a vehicle guidance system to which a vehicle locating system according to an embodiment of the present invention is applied.
Fig. 2 is a schematic view illustrating a specific configuration example of the vehicle guidance system according to the embodiment.
Fig. 3 is an explanatory view illustrating a first configuration example of a portion to be detected.
Fig. 4 is an explanatory view illustrating a second configuration example of the portion to be detected.
Fig. 5 is an explanatory view illustrating a third configuration example of the portion to be detected.
Fig. 6 is an explanatory view illustrating a fourth configuration example of the portion to be detected.
Fig. 7 is an explanatory view illustrating a fifth configuration example of the portion to be detected.
Fig. 8 is a block diagram illustrating configuration examples of a vehicle locating device and a vehicle controller according to the embodiment.
Fig. 9 is a flowchart illustrating an operation example of the vehicle locating device according to the embodiment.
Fig. 10 is a flowchart illustrating an operation example of the vehicle controller according to the embodiment.
Fig. 11 is an explanatory view illustrating a configuration example including four portions to be detected. Description of Embodiments

A detailed description will hereinafter be made on a preferred embodiment of the present invention with reference to the accompanying drawings. In the present specification and the drawings, components having substantially the same functional configuration will be denoted by the same reference sign, and a description thereon will not be repeated.

### <1. Configuration Example of Vehicle Guidance System>

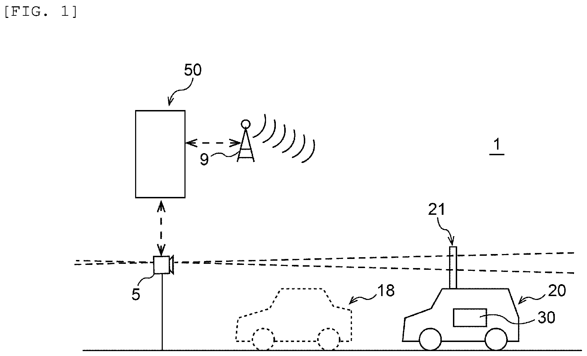

First, a description will be made on a configuration example of a vehicle guidance system to which a vehicle locating system according to this embodiment is applied. Fig. 1 is a schematic view illustrating an example of a basic configuration of a vehicle guidance system 1.

As illustrated in Fig. 1, the vehicle guidance system 1 includes a detector 5, a vehicle locating device 50, a portion 21 to be detected, and a vehicle controller 30. Of these, the portion 21 to be detected and the vehicle controller 30 are provided to a vehicle 20, and the detector 5 and the vehicle locating device 50 are installed on the outside of the vehicle 20. The vehicle guidance system 1 is a system in which the vehicle locating device 50, which is installed on the outside of the vehicle 20, identifies a location of the vehicle 20 on the basis of detection information that is detected by one or a plurality of the detectors 5 installed in an identification area, so as to guide the vehicle 20 to a specified target location.

The identification area may be an area that is set appropriately, and is set as a range where at least the vehicle locating device 50 and the vehicle 20 can communicate with each other via a wireless communication network. Furthermore, in the case where the detector 5 and the vehicle locating device 50 communicate with each other by wireless communication means, the identification area is set as a range where the detector 5 and the vehicle locating device 50 can communicate with each other.

The vehicle 20 as a guiding target is a vehicle capable of executing autonomous driving control, for example. The vehicle 20 capable of executing the autonomous driving control includes one or plural control systems, each of which automatically controls respective one of drive power, a braking force, a steering angle, a gear ratio, switching between forward/rearward travel, and the like. In addition, in order to avoid contact of the vehicle 20 with another vehicle 18, an obstacle, or a person, various sensor devices are mounted to the vehicle 20 so as to detect environment around the vehicle 20. In the present specification, autonomous driving means a driving state where at least some or all of start or stop operation of the vehicle 20 and operations to adjust a speed and an advancing direction thereof are performed without someone's hands. Since the vehicle capable of executing the autonomous driving control can be configured by using known techniques, a detailed description thereon will not be made herein.

The vehicle 20 as a detection target includes the portion 21 to be detected. The portion 21 to be detected is provided to extend upward to a height that at least exceeds a roof top. The height of the portion 21 to be detected is set such that, when seen from the detector 5, the portion 21 to be detected does not go into shadow of the other vehicle 18, the obstacle, or the like so as to prevent the portion 21 to be detected from becoming undetectable. In the case where the height of the portion 21 to be detected is too low, the portion 21 to be detected is possibly hidden behind the other vehicle 18, the obstacle, or the person when seen from the detector 5. On the other hand, in the case where the height of the portion 21 to be detected is too high, the portion 21 to be detected possibly contacts a roof or the like in the area, or attachment of the portion 21 to be detected to the vehicle 20 possibly becomes difficult. For these reasons, the height of the portion 21 to be detected is set at an appropriate height that at least exceeds the roof top and corresponds to use environment.

The portion 21 to be detected may be detachable from the vehicle 20 as the detection target. For example, in the case where the vehicle 20 of a user is automatically guided to an appropriate parking spot in a parking lot or the like, the portion 21 to be detected is attached to the vehicle 20 at a start of use, and is detached from the vehicle 20 after use. Alternatively, the portion 21 to be detected may be fixed to the vehicle 20 as the detection target. For example, in the case where the particular vehicle 20, which is used in a warehouse, a factory, or the like, is guided to an appropriate target location, the portion 21 to be detected may be installed on the vehicle 20 at all times.

The portion 21 to be detected may be configured that the height thereof can be adjusted. In the case where the height of the portion 21 to be detected can be adjusted, the height of the portion 21 to be detected can be changed according to the use environment of the vehicle locating system, which makes the portion 21 to be detected versatile. The height of the portion 21 to be detected may be adjusted manually, or the adjustment thereof may be controlled by using power such as electric power or a pressure.

In this embodiment, the portion 21 to be detected is not only used to identify the location of the vehicle 20 on map data but also used to identify an orientation of the vehicle 20. Thus, the portion 21 to be detected is configured to have a different shape depending on a direction of view. A detailed description on a specific configuration example of the portion 21 to be detected will be made below.

The detector 5 is a device for detecting the portion 21 to be detected that is provided to the vehicle 20. The detector 5 includes one or plural sensor elements of a radar sensor, an imaging camera, an ultrasonic sensor, or a LiDAR device, for example. Each of the detectors 5 is not particularly limited as long as each of the detectors 5 is a device capable of at least detecting the portion 21 to be detected that exists within a detection range. The detector 5 is installed at a height position at which the portion 21 to be detected, which is provided to the vehicle 20, can be detected without being blocked by the other vehicle 18, the obstacle, or the like.

The detector 5 is preferably a device capable of measuring a distance from the detector 5 to the portion 21 to be detected. For example, in the case where the detector 5 is any of the radar sensor, a stereo camera, the ultrasonic sensor, or the LiDAR device, the detector 5 can measure the distance to the portion 21 to be detected on the basis of the detection information. However, in the case where the plural detectors 5 are arranged such that at least two of the detectors 5 can detect the portion 21 to be detected regardless of where in the identification area the portion 21 to be detected exists, the location of the portion 21 to be detected can be identified on the basis of the detection information of the plural detectors 5 even when none of the detectors 5 cannot measure the distance.

The number of the detector 5 that is installed in the identification area may be one or more. However, since a detectable range of each of the detectors 5 is determined, the plural detectors 5 are preferably installed such that the portion 21 to be detected is detected in an entire range of the identification area by the detectors 5. The detection information, which is detected by the detector 5, is sent to the vehicle locating device 50. The detector 5 sends a signal to the vehicle locating device 50 by wired or wireless communication means.

The vehicle locating device 50 identifies the location of the vehicle 20 on the map data on the basis of the detection information of the detector 5. The vehicle locating device 50 according to this embodiment also identifies an orientation of the vehicle 20 on the basis of the detection information of the detector 5. The vehicle locating device 50 may further identify at least one of a vehicle speed or the advancing direction of the vehicle 20. Based on information on the identified location of the vehicle 20 on the map data, the vehicle locating device 50 according to this embodiment sets a target location of the vehicle 20 after a specified time. The vehicle locating device 50 sends information on the location of the vehicle 20 and the target location thereof after the specified time to the vehicle 20 via the communication network. The vehicle locating device 50 is connected to the communication network via a base station 9, for example. The communication network may be a moving body network using a communication method such as Wi-Fi or Long-Term Evolution (LTE).

For example, in the vehicle guidance system 1, the target location to which the vehicle 20 is guided is set in the identification area, and a basic route on which the vehicle 20 is guided to the target location is set. The vehicle controller 30, which is provided to the vehicle 20, uses the information sent from the vehicle locating device 50 while controlling travel of the vehicle 20 along the basic route. Accordingly, the vehicle controller 30 can make the vehicle 20 travel on the basic route with a high degree of accuracy. In addition, even when the location of the vehicle 20 is departed from the basic route due to an error in arithmetic processing or in order to avoid a contact with a certain obstacle such as the other vehicle 18, the vehicle controller 30 can make the vehicle 20 return to the basic route by using the information sent from the vehicle locating device 50.

The vehicle controller 30 controls the travel of the vehicle 20 on the basis of the information sent from the vehicle locating device 50. More specifically, based on the information on the location of the vehicle 20 and the target location thereof after the specified time, the vehicle controller 30 sets the drive power, the braking force, the steering angle, the gear ratio, switching between forward/reverse travel, and the like of the vehicle 20, and then outputs a drive signal to an actuator that controls respective one of these elements. At this time, based on information on environment around the vehicle 20, which is detected by the sensor device, the vehicle controller 30 controls the travel of the vehicle 20 in a manner to prevent the contact of the vehicle 20 with the other vehicle 18, the obstacle, or the like.

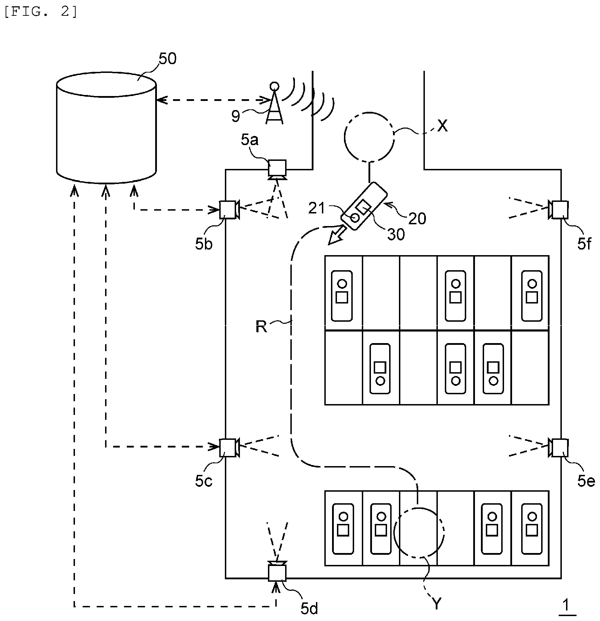

Fig. 2 is an explanatory view illustrating an example of a specific configuration of the vehicle guidance system 1. The vehicle guidance system 1 illustrated in Fig. 2 guides the vehicle 20 from a control start location X to a target location Y. Such a vehicle guidance system 1 can be used as a system that moves the vehicle 20 to an appropriate target location in the parking lot, a vehicle manufacturing plant, the warehouse, or the like, for example.

In the vehicle guidance system 1, in order to cover an entire range of a travel area of the vehicle 20 as the detection range, plural (six in the example illustrated in Fig. 2) detectors 5a to 5f (hereinafter, collectively referred to as the "detectors 5" unless particularly distinguished) are installed. Each of the plural detectors 5 acquires information with which it is possible to determine whether an object exists within the detection range, and then outputs the detection information to the vehicle locating device 50. Each of the detectors 5 sends a signal to the vehicle locating device 50 via the wired or wireless communication means.

Based on the detection information sent from the plural detectors 5, the vehicle locating device 50 determines whether the portion 21 to be detected is detected. In the case where the portion 21 to be detected is detected, the vehicle locating device 50 identifies the location of the vehicle 20 on the map data on the basis of information on the portion 21 to be detected. For example, based on the detection information sent from the one or plural detectors 5, the vehicle locating device 50 calculates the distance from the respective detector 5 to the portion 21 to be detected.

The vehicle locating device 50 stores information on an installed location and a detection range of each of the detectors 5a to 5f on the map data. Based on the detection information sent from each of the detectors 5, the vehicle locating device 50 calculates a relative location of the portion 21 to be detected to a specified reference location on the map data. For example, the vehicle locating device 50 identifies the relative location of the portion 21 to be detected by using the installed location of each of the detectors 5a to 5f as the reference location, and then identifies the location of the portion 21 to be detected on the map data. The identified location of the portion 21 to be detected corresponds to the location of the vehicle 20 on the map data.

For example, in a state illustrated in Fig. 2, the portion 21 to be detected, which is provided to the vehicle 20, exists within the detection ranges of the two detectors 5b, 5f. In this case, based on the detection information sent from each of the detectors 5a to 5f, the vehicle locating device 50 determines that the portion 21 to be detected is detected by the two detectors 5b, 5f. The vehicle locating device 50 identifies the location of the portion 21 to be detected on the map data while checking such a location against the information on the installed locations of the detectors 5b, 5f, which is stored in advance. Instead of the vehicle locating device 50 acquiring the detection information from all of the detectors 5a to 5f, the detection information may be sent to the vehicle locating device 50 only from the detector (s) 5 that detects the portion 21 to be detected.

In addition, based on the detection information sent from the detectors 5, the vehicle locating device 50 may identify at least one of the orientation, the vehicle speed, and the advancing direction of the vehicle 20. In this embodiment, the vehicle locating device 50 identifies the orientation of the vehicle 20 on the basis of information on the shape of the portion 21 to be detected, which is detected by the detector 5. Furthermore, the vehicle locating device 50 can identify the vehicle speed and the advancing direction of the vehicle 20 on the basis of a location change of the portion 21 to be detected, which is detected by the detector 5.

Based on the information on the location, the orientation, the vehicle speed, and the advancing direction of the vehicle 20 on the map data, the vehicle locating device 50 sets the target location of the vehicle 20 after the specified time. At every specified time, the vehicle locating device 50 sends, to the vehicle 20, the information on the location of the vehicle 20 on the map data and the information on the target location of the vehicle 20 after the specified time via the base station 9 and the communication network. More specifically, the vehicle locating device 50 receives the detection information from the detector 5 at the every specified time, and sends the information on the location of the vehicle 20 and the target location thereof after the specified time, which is acquired by executing the specified arithmetic processing, to the vehicle 20 at the every specified time. The specified time may be set appropriately on the basis of a processing speed and the like of the vehicle locating device 50.

The vehicle controller 30, which is mounted to the vehicle 20, receives the information sent from the vehicle locating device 50, and controls the travel of the vehicle 20 on the basis of the received information. As a result, the steering angle, the speed, or acceleration of the vehicle 20 is adjusted at the every specified time, and the vehicle 20 can be guided to the target location Y by following a basic route R while the contact of the vehicle 20 with the other vehicle or the like is prevented.

### <2. Configuration Example of Portion To Be Detected>

Next, a description will be made on a configuration example of the portion 21 to be detected, which is provided to the vehicle 20. As described above, the portion 21 to be detected is provided to extend upward to the height that at least exceeds the roof top of the vehicle 20. In this way, the detector 5 can detect the portion 21 to be detected while the portion 21 to be detected is not blocked by the other vehicle, the obstacle, or the like. Thus, it is possible to improve reliability of identifying the location of the vehicle 20. In addition, the portion 21 to be detected is configured that at least the orientation of the vehicle 20 can be identified. A description will hereinafter be made on several configuration examples of the portion 21 to be detected, each of which can be applied to the vehicle guidance system 1 according to this embodiment.

### (First Configuration Example)

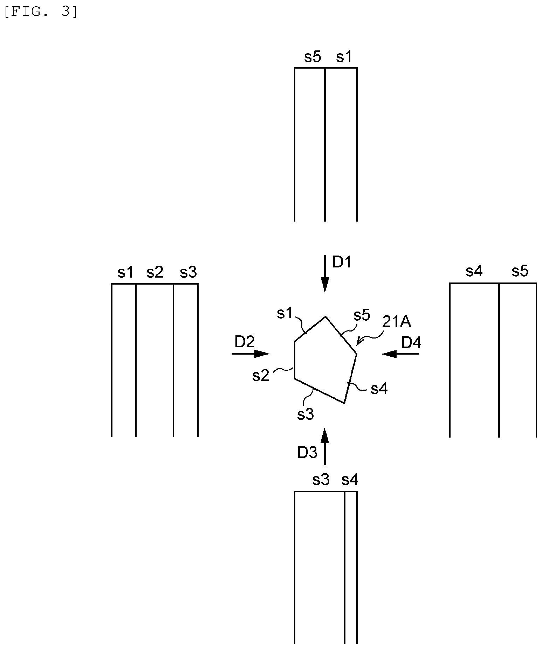

Fig. 3 is an explanatory view illustrating a first configuration example of the portion 21 to be detected. Fig. 3 is an explanatory view illustrating a planar shape of a portion 21A to be detected according to the first configuration example when the portion 21A to be detected is seen from above, and illustrating how the portion 21A to be detected looks when the portion 21A to be detected is seen in four directions indicated by arrows.

The portion 21A to be detected according to the first configuration example is suited when the detector 5 is the imaging camera or the LiDAR device. The planar shape of the portion 21A to be detected, which is seen from above, is a pentagon but is not an equilateral pentagon. This portion 21A to be detected has the different shape depending on the direction of view in a horizontal direction. The "different shape" herein does not mean that a contour of an outer shape differs but means that, even with the same contour of the outer shape, how a surface, a ridge line, or the like looks different.

More specifically, when the portion 21A to be detected is seen in an arrow D1 direction, it looks as if a fifth surface s5 and a first surface s1 are aligned at equal intervals from the left. When the portion 21A to be detected is seen in an arrow D2 direction, it looks as if the first surface s1, a second surface s2, and a third surface s3 are aligned from the left. In this case, the second surface s2 at the center looks the widest. When the portion 21A to be detected is seen in an arrow D3 direction, it looks as if the third surface s3 and a fourth surface s4 are aligned from the left. In this case, the third surface s3 on the left looks wider than the fourth surface s4. When the portion 21A to be detected is seen in an arrow D4 direction, it looks as if the fourth surface s4 and the fifth surface s5 are aligned from the left. In this case, the fourth surface s4 on the left looks slightly wider than the fifth surface s5. When the portion 21A to be detected is seen in the arrow D2 direction and the arrow D4 direction, the whole contour thereof looks wider than that seen in the arrow D1 direction and the arrow D3 direction.

Just as described, the width of the whole contour, the number of the visible surfaces, a component ratio of the widths of the visible surfaces of the portion 21A to be detected according to the first configuration example differ by the direction of view. Accordingly, the vehicle locating device 50 can identify how the portion 21A to be detected is arranged with respect to the detector 5 by determining how the portion 21A to be detected looks on the basis of the detection information sent from the detector 5. Then, the vehicle locating device 50 checks the way the portion 21A to be detected is arranged with respect to the detector 5 against information on an arrangement state of the portion 21A to be detected in the vehicle 20, which is stored in advance, and can thereby identify the orientation of the vehicle 20.

The planar shape of the portion 21A to be detected according to the first configuration example that is seen from above is the pentagon. However, the planar shape is not limited to the pentagon. The planar shape of the portion 21A to be detected can be any shape except for a perfect circle and an equilateral polygon as long as such a shape looks different depending on the direction of view.

In the case where the detector 5 is the imaging camera, the surfaces s1 to s5 of the portion 21A to be detected according to the first configuration example may be in different colors. In this way, the identification of the direction of seeing the portion 21A to be detected can be further facilitated.

### (Second Configuration Example)

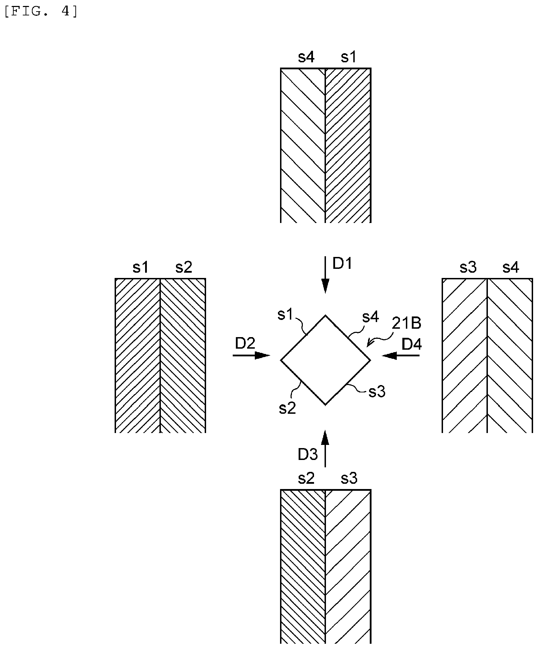

Fig. 4 is an explanatory view illustrating a second configuration example of the portion 21 to be detected. Fig. 4 is an explanatory view illustrating a planar shape of a portion 21B to be detected according to the second configuration example when the portion 21B to be detected is seen from above, and illustrating how the portion 21B to be detected looks when the portion 21B to be detected is seen in the four directions indicated by the arrows.

The portion 21B to be detected according to the second configuration example is suited when the detector 5 is the imaging camera. The planar shape of the portion 21B to be detected, which is seen from above, is a square. Four side surfaces s1 to s4 of the portion 21B to be detected are in different colors. Accordingly, the coloration of the portion 21B to be detected differs depending on the direction of view in the horizontal direction.

More specifically, when the portion 21B to be detected is seen in the arrow D1 direction, it looks as if the fourth surface s4 and the first surface s1 are aligned from the left. When the portion 21B to be detected is seen in the arrow D2 direction, it looks as if the first surface s1 and the second surface s2 are aligned from the left. When the portion 21B to be detected is seen in the arrow D3 direction, it looks as if the second surface s2 and the third surface s3 are aligned from the left. When the portion 21B to be detected is seen in an arrow D4 direction, it looks as if the third surface s3 and the fourth surface s4 are aligned from the left. When seen in the four directions illustrated in Fig. 4, a contour of an outer shape and a component ratio of widths of the surfaces of the portion 21B to be detected look the same. However, due to the different coloration, with color recognition of a captured image by the imaging camera, it is possible to identify the direction of seeing the portion 21B to be detected.

In the portion 21B to be detected according to the second configuration example, instead of applying the different colors to the surfaces s1 to s4, reflectance of each of the surfaces s1 to s4 may differ. A configuration of having the different reflectance for each of the surfaces s1 to s4 is suited when the detector 5 is the radar sensor or the LiDAR device. In this case, the direction of seeing the portion 21B to be detected can be identified by a difference in density distribution of a reflected wave, which is detected by the detector 5. The reflectance can differ by adjusting surface roughness, for example.

Just as described, in the portion 21B to be detected according to the second configuration example, the coloration in the image and the density distribution of the detected reflected wave differ by the direction of view. Accordingly, the vehicle locating device 50 can identify how the portion 21B to be detected is arranged with respect to the detector 5 by determining the coloration of the portion 21B to be detected and the density distribution of the reflected wave on the basis of the detection information sent from the detector 5. Then, the vehicle locating device 50 checks the way the portion 21B to be detected is arranged with respect to the detector 5 against information on an arrangement state of the portion 21B to be detected in the vehicle 20, which is stored in advance, and can thereby identify the orientation of the vehicle 20.

The planar shape of the portion 21B to be detected according to the second configuration example that is seen from above is the square. However, the planar shape is not limited to the square. The planar shape of the portion 21B to be detected is not particularly limited, and the coloration thereof only needs to differ by the direction of view.

### (Third Configuration Example)

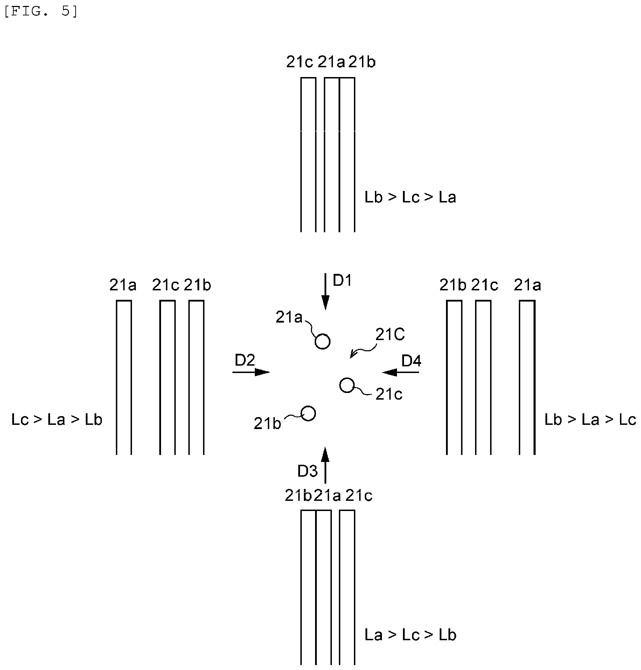

Fig. 5 is an explanatory view illustrating a third configuration example of the portion 21 to be detected. Fig. 5 is an explanatory view illustrating an arrangement location of each of portions 21a to 21c to be detected when a portion 21C to be detected according to the third configuration example is seen from above, and illustrating how the portion 21C to be detected looks when the portion 21C to be detected is seen in the four directions indicated by the arrows.

The portion 21C to be detected according to the third configuration example is suited when the detector 5 is the imaging camera, the radar sensor, the ultrasonic sensor, or the LiDAR device. The portion 21C to be detected according to the third configuration example is constructed of the plural portions 21a to 21c to be detected, each of which has the same shape, and the arrangement locations thereof, which are seen from above and illustrated in Fig. 5, form a triangle that is not an equilateral triangle. How this portion 21C to be detected looks different depending on the direction of view in the horizontal direction. The term "looks different" herein means that an entire width of the plural portions 21a to 21c to be detected and a distance between two each of the portions 21a to 21c to be detected differ.

More specifically, when the portion 21C to be detected is seen in the arrow D1 direction, it looks as if the third portion 21c to be detected, the first portion 21a to be detected, and the second portion 21b to be detected are aligned from the left. In this case, the first portion 21a to be detected looks closer to the second portion 21b to be detected side (a right side) than the third portion 21c to be detected. When the portion 21C to be detected is seen in the arrow D2 direction, it looks as if the first portion 21a to be detected, the third portion 21c to be detected, and the second portion 21b to be detected are aligned from the left. In this case, the third portion 21c to be detected looks closer to the second portion 21b to be detected side (the right side) than the first portion 21a to be detected. When the portion 21C to be detected is seen in the arrow D3 direction, it looks as if the second portion 21b to be detected, the first portion 21a to be detected, and the third portion 21c to be detected are aligned from the left. In this case, the first portion 21a to be detected looks closer to the second portion 21b to be detected side (the left side) than the third portion 21c to be detected. When the portion 21C to be detected is seen in the arrow D4 direction, it looks as if the second portion 21b to be detected, the third portion 21c to be detected, and the first portion 21a to be detected are aligned from the left. In this case, the third portion 21c to be detected looks closer to the second portion 21b to be detected side (the left side) than the first portion 21a to be detected. When the portion 21C to be detected is seen in the arrow D2 direction and the arrow D4 direction, a whole contour thereof looks wider than that seen in the arrow D1 direction and the arrow D3 direction.

Just as described, the width of the whole contour and the distance between two each of the portions 21a to 21c to be detected of the portion 21C to be detected according to the third configuration example differ by the direction of view. Accordingly, the vehicle locating device 50 can identify how the portion 21C to be detected is arranged with respect to the detector 5 by determining how the portion 21C to be detected looks on the basis of the detection information sent from the detector 5. Then, the vehicle locating device 50 checks the way the portion 21C to be detected is arranged with respect to the detector 5 against information on an arrangement state of the portion 21C to be detected in the vehicle 20, which is stored in advance, and can thereby identify the orientation of the vehicle 20.

The portion 21C to be detected according to the third configuration example is constructed of the three portions 21a to 21c to be detected, and the three portions 21a to 21c to be detected are arranged such that the planar shape of the portion 21C to be detected, which is seen from above, is the triangle. However, the number of the plural portions to be detected and the planar shape of the arrangement are not limited to this example. The portion 21C to be detected only needs to be configured that the overall width of the plural portions to be detected and the distance between two each of the portions to be detected differ by the direction of view.

In the case where the detector 5 is the imaging camera, the portions 21a to 21c to be detected, which constitute the portion 21C to be detected according to the third configuration example, may be in different colors. In the case where the detector 5 is the radar sensor or the LiDAR device, it may be configured that reflectance of each of the portions 21a to 21c to be detected, which constitute the portion 21C to be detected according to the third configuration example, differs. In this way, the identification of the direction of seeing the portion 21C to be detected can be further facilitated.

Furthermore, in the case where the detector 5 can measure a distance to each of the portions 21a to 21c to be detected, which constitute the portion 21C to be detected according to the third configuration example, the direction of seeing the portion 21C to be detected can be identified by using information on the distance. Fig. 5 illustrates a magnitude relationships among distances La, Lb, Lc from the detector 5 to the portions 21a to 21c to be detected. Just as described, the distances La, Lb, Lc from the detector 5 to the portions 21a to 21c to be detected differ by the direction of seeing the portion 21C to be detected. Thus, the direction of seeing the portion 21C to be detected can be identified by using the information on the distance.

### (Fourth Configuration Example)

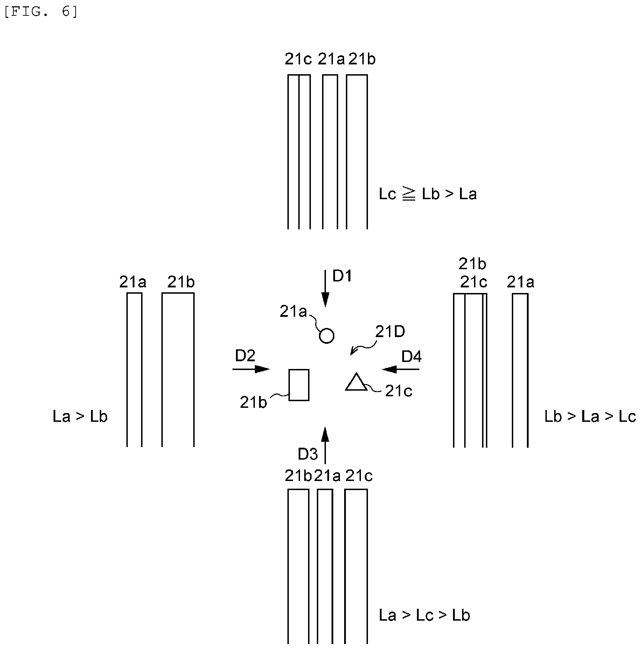

Fig. 6 is an explanatory view illustrating a fourth configuration example of the portion 21 to be detected. Fig. 6 is an explanatory view illustrating an arrangement location of each of portions 21a to 21c to be detected when a portion 21D to be detected according to the fourth configuration example is seen from above, and illustrating how the portion 21D to be detected looks when the portion 21D to be detected is seen in the four directions indicated by the arrows.

The portion 21D to be detected according to the fourth configuration example is suited when the detector 5 is the imaging camera, the radar sensor, the ultrasonic sensor, or the LiDAR device. The portion 21D to be detected according to the fourth configuration example is constructed of the plural portions 21a to 21c to be detected, each of which has a different shape. A planar shape of the first portion 21a to be detected is the perfect circle, a planar shape of the second portion 21b to be detected is a rectangle, and a planar shape of the third portion 21c to be detected is a triangle. Although arrangement locations of the plural portions 21a to 21c, which are seen from above and illustrated in Fig. 6, form the equilateral triangle, how this portion 21D to be detected looks different depending on the direction of view in the horizontal direction. The term "looks different" herein means that how an entire width of the plural portions 21a to 21c to be detected, a distance between two each of the portions 21a to 21c to be detected, and a ridge line look different.

More specifically, when the portion 21D to be detected is seen in the arrow D1 direction, it looks as if the third portion 21c to be detected, the first portion 21a to be detected, and the second portion 21b to be detected are aligned from the left. In this case, a width and ridge lines that correspond to the planar shape of each of the portions 21a to 21c to be detected are visible. More specifically, when the portion 21D to be detected is seen in the arrow D2 direction, it looks as if the first portion 21a to be detected and the second portion 21b to be detected are aligned from the left. In this case, the third portion 21c to be detected overlaps the second portion 21b to be detected, and is hidden behind the second portion 21b to be detected. When the portion 21D to be detected is seen in the arrow D3 direction, it looks as if the second portion 21b to be detected, the first portion 21a to be detected, and the third portion 21c to be detected are aligned from the left. In this case, the width and the ridge lines that correspond to the planar shape of each of the portions 21a to 21c to be detected are visible. When the portion 21D to be detected is seen in the arrow D4 direction, it looks as if the second portion 21b to be detected, the third portion 21c to be detected, and the first portion 21a to be detected are aligned from the left. In this case, the second portion 21b to be detected and the third portion 21c to be detected overlap each other, and the second portion 21b to be detected is visible behind the third portion 21c to be detected. When the portion 21D to be detected is seen in the arrow D2 direction and the arrow D4 direction, a whole contour thereof looks slightly narrower than that seen in the arrow D1 direction and the arrow D3 direction.

Just as described, in the portion 21D to be detected according to the fourth configuration example, how the width of the whole contour, the distance between two each of the portions 21a to 21c to be detected, and the ridge lines look different depending on the direction of view. Accordingly, the vehicle locating device 50 can identify how the portion 21D to be detected is arranged with respect to the detector 5 by determining how the portion 21D to be detected looks on the basis of the detection information sent from the detector 5. Then, the vehicle locating device 50 checks the way the portion 21D to be detected is arranged with respect to the detector 5 against information on an arrangement state of the portion 21D to be detected in the vehicle 20, which is stored in advance, and can thereby identify the orientation of the vehicle 20.

The portion 21D to be detected according to the fourth configuration example is constructed of the three portions 21a to 21c to be detected, and the three portions 21a to 21c to be detected are arranged such that the planar shape of the portion 21D to be detected, which is seen from above, is the triangle. However, the number of the plural portions to be detected and the planar shape of the arrangement are not limited to this example. All of planar shapes of the plural portion 21D to be detected may differ, or the planar shapes of the plural portion 21D to be detected may partially differ. The portion 21D to be detected only needs to be configured that the overall width of the plural portions 21a to 21c to be detected and the distance between two each of the portions 21a to 21c to be detected differ by the direction of view.

In the case where the detector 5 is the imaging camera, the portions 21a to 21c to be detected, which constitute the portion 21D to be detected according to the fourth configuration example, may be in different colors. In the case where the detector 5 is the radar sensor or the LiDAR device, it may be configured that reflectance of each of the portions 21a to 21c to be detected, which constitute the portion 21D to be detected according to the fourth configuration example, differs. In this way, the identification of the direction of seeing the portion 21D to be detected can be further facilitated.

Furthermore, in the case where the detector 5 can measure distances La, Lb, Lc to the portions 21a to 21c to be detected, which constitute the portion 21D to be detected according to the fourth configuration example, the direction of seeing the portion 21D to be detected can be identified by using information on the distances.

### (Fifth Configuration Example)

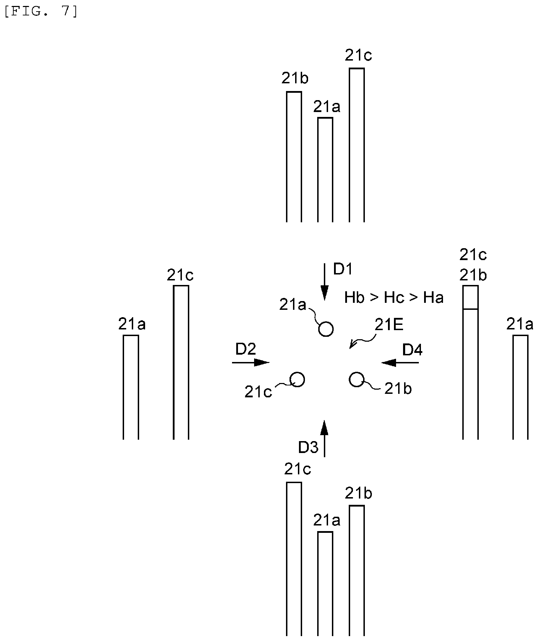

Fig. 7 is an explanatory view illustrating a fifth configuration example of the portion 21 to be detected. Fig. 7 is an explanatory view illustrating an arrangement location of each of portions 21a to 21c to be detected when a portion 21E to be detected according to the fifth configuration example is seen from above, and illustrating how the portion 21E to be detected looks when the portion 21E to be detected is seen in the four directions indicated by the arrows.

The portion 21E to be detected according to the fifth configuration example is suited when the detector 5 is the imaging camera, the radar sensor, the ultrasonic sensor, or the LiDAR device. The portion 21E to be detected according to the fifth configuration example is constructed of the plural portions 21a to 21c to be detected, each of which has a different height. The heights of the first portion 21a to be detected, the second portion 21b to be detected, and the third portion 21c to be detected are descended in this order. Although arrangement locations of the plural portions 21a to 21c, which are seen from above and illustrated in Fig. 7, form the equilateral triangle, how this portion 21E to be detected looks different depending on the direction of view in the horizontal direction. The term "looks different" herein means that an entire width of the plural portions 21a to 21c to be detected, a distance between two each of the portions 21a to 21c to be detected, and the arrangement locations thereof differ.

More specifically, when the portion 21E to be detected is seen in the arrow D1 direction, it looks as if the second portion 21b to be detected, the first portion 21a to be detected, and the third portion 21c to be detected are aligned from the left. When the portion 21E to be detected is seen in the arrow D2 direction, it looks as if the first portion 21a to be detected and the third portion 21c to be detected are aligned from the left. In this case, the second portion 21b to be detected overlaps the third portion 21c to be detected, and is hidden behind the third portion 21c to be detected. When the portion 21E to be detected is seen in the arrow D3 direction, it looks as if the third portion 21c to be detected, the first portion 21a to be detected, and the second portion 21b to be detected are aligned from the left. When the portion 21E to be detected is seen in the arrow D4 direction, it looks as if the second portion 21b to be detected, the third portion 21c to be detected, and the first portion 21a to be detected are aligned from the left. In this case, the second portion 21b to be detected and the third portion 21c to be detected overlap each other, and the third portion 21c to be detected is visible behind the second portion 21b to be detected. When the portion 21E to be detected is seen in the arrow D2 direction and the arrow D4 direction, a whole contour thereof looks slightly narrower than that seen in the arrow D1 direction and the arrow D3 direction.

Just as described, the width of the whole contour, the distance between two each of the portions 21a to 21c to be detected, and the arrangement locations thereof of the portion 21E to be detected according to the fifth configuration example differ by the direction of view. Accordingly, the vehicle locating device 50 can identify how the portion 21E to be detected is arranged with respect to the detector 5 by determining how the portion 21E to be detected looks on the basis of the detection information sent from the detector 5. Then, the vehicle locating device 50 checks the way the portion 21E to be detected is arranged with respect to the detector 5 against information on an arrangement state of the portion 21E to be detected in the vehicle 20, which is stored in advance, and can thereby identify the orientation of the vehicle 20.

The portion 21E to be detected according to the fifth configuration example is constructed of the three portions 21a to 21c to be detected, and the three portions 21a to 21c to be detected are arranged such that the planar shape of the portion 21E to be detected, which is seen from above, is the equilateral triangle. However, the number of the plural portions to be detected and the planar shape of the arrangement are not limited to this example. All of planar shapes of the plural portion 21E to be detected may differ, or the planar shapes of the plural portion 21E to be detected may partially differ. The portion 21E to be detected only needs to be configured that the overall width of the plural portions 21a to 21c to be detected and the distance between two each of the portions 21a to 21c to be detected differ by the direction of view.

In the case where the detector 5 is the imaging camera, the portions 21a to 21c to be detected, which constitute the portion 21E to be detected according to the fifth configuration example, may be in different colors. In the case where the detector 5 is the radar sensor or the LiDAR device, it may be configured that reflectance of each of the portions 21a to 21c to be detected, which constitute the portion 21E to be detected according to the fifth configuration example, differs. In this way, the identification of the direction of seeing the portion 21E to be detected can be further facilitated.

Furthermore, in the case where the detector 5 can measure distances La, Lb, Lc to the portions 21a to 21c to be detected, which constitute the portion 21E to be detected according to the fifth configuration example, the direction of seeing the portion 21E to be detected can be identified by using information on the distances.

### <3. Configuration Examples of Information Processor and Vehicle Controller>

Next, a description will be made on configuration examples of the vehicle locating device 50 and the vehicle controller 30 that are used in the vehicle guidance system 1 illustrated in Fig. 2.

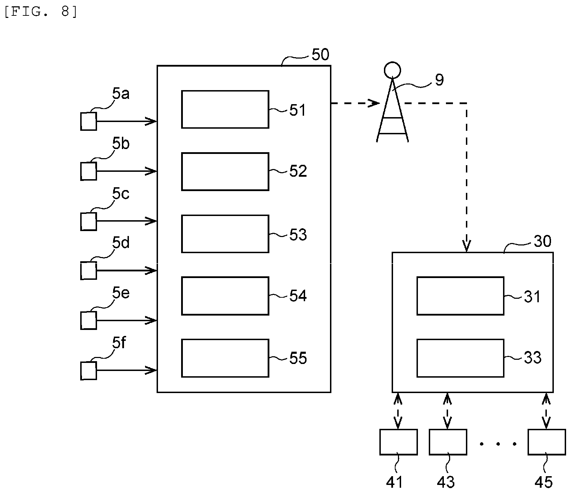

Fig. 8 is a block diagram illustrating the configuration examples of the vehicle locating device 50 and the vehicle controller 30. The vehicle locating device 50 calculates a current location and the target location after the specified time of the vehicle 20, and sends vehicle control information including these pieces of information to the vehicle controller 30. The vehicle controller 30 sets target control amounts of the various control systems on the basis of the received information, and sends information on the target control amount to the respective control systems.

### (Vehicle Locating Device)

The vehicle locating device 50 includes a first communication section 51, a second communication section 52, a detection information processing section 53, a vehicle control information setting section 54, and a storage section 55. The vehicle locating device 50 may partially or entirely be constructed of a microcomputer, a microprocessor unit, or the like, or may be constructed of one whose firmware and the like can be updated, for example. Alternatively, the vehicle locating device 50 may partially or entirely be a program module or the like that is executed by a command from a central processing unit (CPU) or the like.

The storage section 55 includes at least one of a storage element and a storage medium. Examples of the storage element are random access memory (RAM) and read only memory (ROM). Examples of the storage medium are a hard disk drive (HDD), a compact disc (CD), a digital versatile disc (DVD), a solid-state drive (SSD), a universal serial bus (USB) flash drive, and a storage device. The storage section 55 stores parameters that are used for a program executed by the microcomputer or the like and various types of the arithmetic processing, arithmetic results, the detection information of the various sensors and the like, and the like.

In this embodiment, the storage section 55 stores the map data of the identification area where at least the vehicle guidance system 1 is installed. The storage section 55 also stores the information on the installed location of the one or plural detectors 5 installed in the identification area on the map data. Furthermore, in the vehicle guidance system 1 according to this embodiment, the storage section 55 of the vehicle locating device 50 stores the information on the target location, to which the vehicle 20 is guided, and information on the basic route on which the vehicle 20 is guided to the target location. The information on the target location may be set when being input to the vehicle locating device 50 by a user, may be set when the computer determines an available space or the like in the identification area, or may be set when being sent from the vehicle controller 30. The information on the basic route may be set when being input to the vehicle locating device 50 by the user, or may be set when being sent from the vehicle controller 30.

The storage section 55 stores the information on the shape of the portion 21 to be detected, which is provided to the vehicle 20, and information on how the portion 21 to be detected is installed to the vehicle 20.

The first communication section 51 is an interface for communication between the detector 5 and the vehicle locating device 50. The vehicle locating device 50 receives the signal, which is output from the detector 5, via the first communication section 51.

The second communication section 52 is an interface for communication between the vehicle controller 30 and the vehicle locating device 50. In the vehicle locating device 50, the second communication section 52 sends a signal to the vehicle controller 30 via the base station 9 and the communication network.

The detection information processing section 53 executes the various types of the arithmetic processing by using the detection information of the detector 5. For example, the detection information processing section 53 may be a function that is implemented when the program is executed by the microcomputer or the like. Based on the detection information sent from the detector 5, the detection information processing section 53 identifies the location and the orientation of the vehicle 20. More specifically, based on the map data stored in the storage section 55, the installed location of each of the detectors 5 on the map data, and the information on the relative location of the portion 21 to be detected, which is detected by each of the detectors 5, to the specified reference location, the detection information processing section 53 calculates the location of the portion 21 to be detected on the map data. The detection information processing section 53 identifies the location of the portion 21 to be detected as the location of the vehicle 20.

In addition, the detection information processing section 53 checks the shape of the portion 21 to be detected (how the portion 21 to be detected looks), which is detected by the detector 5, against the information on the shape of the portion 21 to be detected and the information on how the portion 21 to be detected is installed to the vehicle 20, which are stored in the storage section 55, and thereby identifies the orientation of the vehicle 20. The detection information processing section 53 may identify the vehicle speed and the advancing direction of the vehicle 20 on the basis of the detection information of the detector 5.

The vehicle control information setting section 54 sets the target location of the vehicle 20 after the specified time. For example, the vehicle control information setting section 54 may be a function that is implemented when the program is executed by the microcomputer or the like. Based on the identified location and orientation of the vehicle 20 and the information on the basic route, the vehicle control information setting section 54 sets the target location of the vehicle 20 after the specified time. The vehicle control information setting section 54 sends information on the set target location to the vehicle controller 30, which is mounted to the vehicle 20, via the second communication section 52.

The vehicle locating device 50 executes identification processing of the location of the vehicle 20, which is based on the detection information sent from the detector 5, setting processing of the target location of the vehicle 20 after the specified time, and sending processing of the information on the location and the target location of the vehicle 20 at specified time intervals.

### (Vehicle Controller)

The vehicle controller 30 includes a communication section 31 and a control information calculation section 33. The vehicle controller 30 may partially or entirely be constructed of a microcomputer, a microprocessor unit, or the like, or may be constructed of one whose firmware and the like can be updated, for example. Alternatively, the vehicle controller 30 may partially or entirely be a program module or the like that is executed by a command from the CPU or the like.

The vehicle controller 30 also stores a storage section, which is not illustrated, such as RAM or ROM. The storage section stores the map data that at least includes the information on the identification area. The storage section also stores the information on the target location, to which the vehicle 20 is guided, and the information on the basic route on which the vehicle 20 is guided to the target location. The information on the target location may be set when being input by the user, or may be set on the basis of information sent from an external device that determines the available space or the like in the identification area. The information on the basic route may be set when being input by the user, or may be set by the computer or the like.

In this embodiment, the vehicle controller 30 has a function as an integrated controller that outputs a control command to each of controllers 41, 43, 45 for controlling the plural control systems. The vehicle controller 30 may be constructed of a single electronic control unit, or may be constructed of plural electronic control units that are mutually communicable. For example, the controllers 41, 43, 45 include at least one of a power controller that controls an internal combustion engine, an electric motor, or the like as a power source of the vehicle 20, a transmission controller that controls a power transmission mechanism including a transmission for changing rotary torque output from the power source and transmitting the rotary torque to a drive wheel, a brake controller that controls a hydraulic or electric brake system, a steering controller that controls a rotation angle of a steering wheel, and the like.

The communication section 31 is an interface for communication between the vehicle controller 30 and the vehicle locating device 50. In the vehicle controller 30, the communication section 31 at least receives the signal that is sent from the vehicle locating device 50 via the communication network.

The control information calculation section 33 sets a target control amount of each of the control systems on the basis of the information sent from the vehicle locating device 50, and sends information on the set target control amount to each of the controllers 41, 43, 45. For example, the control information calculation section 33 may be a function that is implemented when a program is executed by the microcomputer or the like. Based on the information on the current location and the orientation of the vehicle 20 and the information on the target location of the vehicle 20 after the specified time, which are sent from the vehicle locating device 50, the control information calculation section 33 sets a target steering angle and target acceleration of the vehicle 20. In addition, based on information on the set target steering angle and the set target acceleration of the vehicle 20, the control information calculation section 33 sets the target control amount of each of the control systems. At this time, an upper limit may be set to a change amount (a change speed) of the operation amount of each of the control systems, so as to prevent sudden steering or sudden acceleration of the vehicle 20.

Furthermore, the control information calculation section 33 detects the other vehicle, the obstacle, or the like around the vehicle 20 on the basis of sensor signals from the sensor devices provided to the vehicle 20, and sets the target control amount of each of the control systems in a manner to avoid the contact with these other vehicle and the like. The target control amount, which is set for a purpose of avoiding the contact with the other vehicle and the like, is prioritized over the target control amount, which is set on the basis of the information sent from the vehicle locating device 50. As a result, the vehicle 20 possibly departs from the basic route to the target location. However, since the vehicle 20 is thereafter controlled according to the target control amount, which is set on the basis of the information sent from the vehicle locating device 50, the vehicle 20 can return onto the basic route.

In this way, the vehicle 20 is controlled on the basis of the information on the location of the vehicle 20 and the information on the target location of the vehicle 20 after the specified time, which are sent from the vehicle locating device 50. Therefore, it is possible to guide the vehicle 20 from the control start location X to the target location Y while securing safety of the vehicle 20.

### (Operation Examples of Information Processor and Vehicle Controller)

Next, a description will be made on operation examples of the vehicle locating device 50 and the vehicle controller 30.

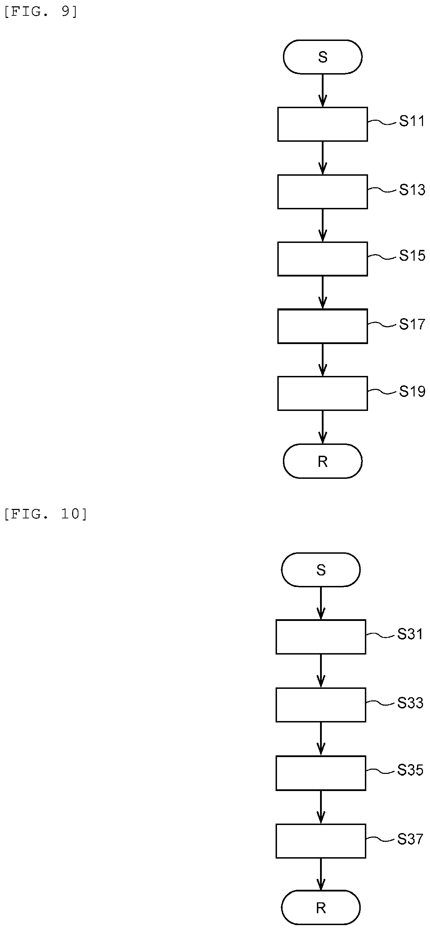

Fig. 9 is a flowchart illustrating the operation example of the vehicle locating device 50. The detection information processing section 53 of the vehicle locating device 50 acquires the detection information, which is sent from the detectors 5a to 5f, via the first communication section 51 (step S11).

Next, based on the detection information acquired from the detectors 5a to 5f, the detection information processing section 53 identifies the detector 5 that has detected the portion 21 to be detected (S13). In a case of the vehicle guidance system 1 according to this embodiment, each of the detectors 5 does not detect an object other than the portion 21 to be detected. More specifically, the portion 21 to be detected is provided to the vehicle 20 in the manner to extend upward to the height that at least exceeds the roof top of the vehicle 20. Thus, a vehicle body other than the portion 21 to be detected and the obstacle do not exist within the detection range of each of the detectors 5. For this reason, based on the detection information of the detectors 5, the detection information processing section 53 can identify the detector 5 that has detected the portion 21 to be detected. The detection information processing section 53 may check the detected shape of the portion 21 to be detected against the information on the shape of the portion 21 to be detected, which is stored in advance, so as to identify the detector 5, which has detected the portion 21 to be detected.

Next, the detection information processing section 53 identifies the location and the orientation of the vehicle 20 on the basis of the information on the portion 21 to be detected, which is detected by the detector 5 (step S15). As described above, based on the map data stored in the storage section 55, the installed location of each of the detectors 5 on the map data, and the information on the relative location of the portion 21 to be detected, which is detected by each of the detectors 5, to the specified reference location, the detection information processing section 53 calculates the location of the portion 21 to be detected on the map data. The detection information processing section 53 identifies the location of the portion 21 to be detected as the location of the vehicle 20. In addition, the detection information processing section 53 checks the shape of the portion 21 to be detected (how the portion 21 to be detected looks), which is detected by the detector 5, against the information on the shape of the portion 21 to be detected and the information on how the portion 21 to be detected is installed to the vehicle 20, which are stored in the storage section 55, and thereby identifies the orientation of the vehicle 20.

Furthermore, in this embodiment, the detection information processing section 53 identifies the vehicle speed and the advancing direction of the vehicle 20 on the basis of the detection information of the detector 5. For example, the detection information processing section 53 can calculate the vehicle speed and the advancing direction of the vehicle 20 on the basis of the location change of the portion 21 to be detected, which is detected by the detector 5.

Next, based on the information on the basic route and the information on the location, the orientation, the vehicle speed, and the advancing direction of the vehicle 20, which have been stored, the vehicle control information setting section 54 sets the target location of the vehicle 20 after the specified time (step S17). Basically, the vehicle control information setting section 54 sets the target location of the vehicle 20 after the specified time such that the vehicle 20 moves along the basic route at the acceleration, which is set in advance. With such a premise, the vehicle control information setting section 54 sets the target location of the vehicle 20 in a manner to make the vehicle 20 return onto the basic route when the location and the advancing direction of the vehicle 20 do not match the basic route.

Next, the vehicle control information setting section 54 sends the information on the set target location of the vehicle 20 and the information on the current location of the vehicle 20 to the vehicle controller 30 via the second communication section 52 and the communication network (step S19) .

The vehicle locating device 50 repeatedly executes the processing in step S11 to step S19 at specified time intervals set in advance.

Fig. 10 is a flowchart illustrating the operation example of the vehicle controller 30. The control information calculation section 33 of the vehicle controller 30 acquires the information on the target location of the vehicle 20 after the specified time and the information on the current location of the vehicle 20, which are sent from the vehicle locating device 50, via the communication section 31 (step S31).

Next, based on the received information on the target location of the vehicle 20 after the specified time and the received information on the current location of the vehicle 20, the control information calculation section 33 sets the target steering angle and the target acceleration of the vehicle 20 (step S33).

Next, based on the information on the set target steering angle and the set target acceleration, the control information calculation section 33 sets the target control amount of each of the control systems (step S35). More specifically, the control information calculation section 33 sets the target control amount of a steering control system on the basis of the information on the target steering angle. In the case where the steering control system is a system that controls the steering angle by a motor such as a stepping motor, the target control amount is a target value of the rotation angle, for example.

In addition, based on the information on the target acceleration, the control information calculation section 33 sets the target control amounts of the power source such as the internal combustion engine or the drive motor, the power transmission mechanism that includes the transmission and the like, and the brake controller. For example, the target control amount of the power source is a target value of output torque, the target control amount of the power transmission mechanism is a target value of the gear ratio, and the target control amount of the brake controller is a target value of a braking force.

At this time, in the case where the contact of the vehicle 20 with the other vehicle, the obstacle, or the like is predicted, the control information calculation section 33 sets the target control amount of each of the control systems in a manner to avoid the contact. This target control amount may be a command to execute emergency brake control or may be a command to cause the vehicle 20 to make a sharp turn.

Next, the control information calculation section 33 sends information on the set target control amounts of the control systems to the controllers 41, 43, 45 (step S37). Each of the controllers 41, 43, 45 that has received the information on the target control amount controls the respective control system on the basis of the target control amount. The vehicle controller 30 repeatedly executes the processing in step S31 to step S37 at specified time intervals set in advance. As a result, the vehicle 20 is guided to the target location Y along the basic route on the basis of the highly accurate location information sent from the vehicle locating device 50.

As it has been described so far, according to the vehicle guidance system 1, to which the vehicle locating system according to this embodiment is applied, the detector 5, which is installed on the outside of the vehicle 20, can detect the portion 21 to be detected, which is provided to the vehicle 20, without the portion 21 to be detected being blocked by the other vehicle or the obstacle. Therefore, the vehicle locating device 50, which receives the detection information sent from the detector 5, can identify the location of the vehicle 20 with the high degree of accuracy on the basis of the detection information on the portion 21 to be detected.

In addition, according to the vehicle guidance system 1 according to this embodiment, the vehicle locating device 50 can identify the orientation of the vehicle 20 on the basis of the detection information on the portion 21 to be detected, which is detected by the detector 5. Furthermore, the vehicle locating device 50 can calculate the speed and the advancing direction of the vehicle 20 on the basis of the location change of the portion 21 to be detected, which is detected by the detector 5. Accordingly, the vehicle locating device 50 sets the target location of the vehicle 20 after the specified time on the basis of the information on the highly accurately identified current location of the vehicle 20, and sends the information on the target location of the vehicle 20 after the specified time to the vehicle controller 30.

In this way, the vehicle controller 30 can make the vehicle 20 travel safely from the control start location X to the target location Y along the basic route.

The preferred embodiment of the present invention has been described in detail so far with reference to the accompanying drawings. However, the present invention is not limited to such an embodiment. It is obvious that a person who has basic knowledge in the technical field to which the present invention pertains could have easily arrived at various modification examples and application examples that fall within the scope of the technical idea described in the claims. It is understood that those naturally fall within the technical scope of the present invention.

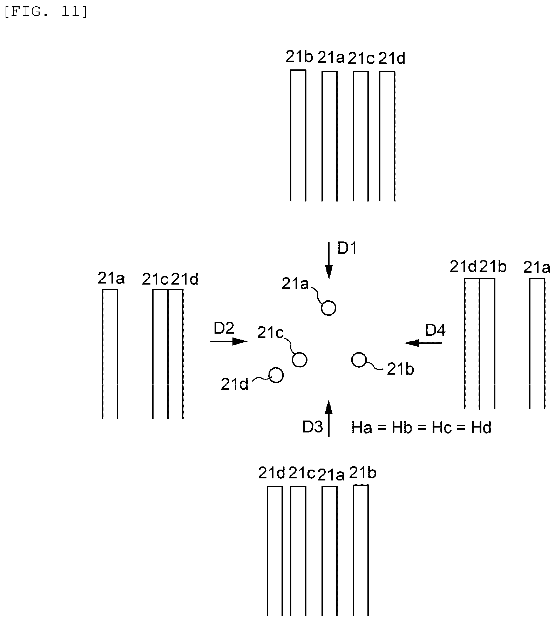

For example, in the above embodiment, the three portions 21a to 21c to be detected are provided to the vehicle 20. However, the present invention is not limited to such an example. The number of the portions to be detected may be two, four, or more. For example, it is assumed that, when the three portions 21a to 21c to be detected are arranged as illustrated in Fig. 7, the heights of the three portions 21a to 21c to be detected are the same (Ha = Hb = Hc). In this case, when the three portions 21a to 21c to be detected are seen in the arrow D4 direction, the second portion 21b to be detected and the third portion 21c to be detected overlap each other, and the orientation of the vehicle 20 cannot be identified without detecting the distances to the three portions 21a to 21c to be detected. To handle such a problem, a fourth portion 21d to be detected is provided as illustrated in Fig. 11. In this way, even when the heights of the four portions 21a to 21d to be detected are the same (Ha = Hb = Hc = Hd), at least three of the portions to be detected are visible in different arrangement regardless of the direction of view. As a result, the orientation of the vehicle 20 can be identified. Also, in the case where the number of the portions to be detected is other than three, the shape of at least one of the portions to be detected may be changed.

In the above embodiment, the vehicle locating device 50, which is installed on the outside of the vehicle 20, calculates the target location of the vehicle 20 after the specified time and sends the information on the target location to the vehicle controller 30. However, the present invention is not limited to such an example. For example, the vehicle locating device 50 may only identify the location of the vehicle 20 on the map data, and may only send the information on the location of the vehicle 20 to the vehicle controller 30. Also, in such an example, by using the information on the highly accurately identified location of the vehicle 20, the vehicle controller 30 can control the travel of the vehicle 20 to make the vehicle 20 reach the target location Y along the basic route.

In the above embodiment, the vehicle locating device 50 calculates the relative location of the portion 21 to be detected with the installed location of the detector 5 as the reference location. However, the present invention is not limited to such an example. For example, based on information on a relative location of the detector 5 to an appropriate reference location and the information on the relative location of the portion 21 to be detected to the installed location of the detector 5, a relative location of the portion 21 to be detected to the appropriate reference location may be calculated. The location of the portion 21 to be detected on the map data can also be identified by using the information on the thus-calculated relative location of the portion 21 to be detected.

The above embodiment is the example in which the vehicle 20 is guided from the control start location X to the target location Y along the basic route, and the vehicle locating device 50 controls the vehicle 20 on the basis of the detection information of the detector 5. However, the present invention is not limited to such an example. For example, in the case where the vehicle guidance system 1 is applied to an on-premises logistic system, the vehicle locating device 50 may set target arrival time of the vehicle 20 at the target location Y and the target location after the specified time further on the basis of information on operational statuses including a production speed and a shipping speed at a production line, a shipping status, and the like.

The vehicle locating device 50 may simultaneously identify the locations of the plural vehicles 20. In this case, the shape of the portion 21 to be detected is changed for each of the vehicles 20. Then, the vehicle controller 30 sends information on an identification code and the like of the own vehicle 20 and the information on the shape of the portion 21 to be detected to the vehicle locating device 50. The vehicle locating device 50 can identify a target vehicle on the basis of the shape of the portion 21 to be detected, which is detected by the detector 5, and can send information on the location and the information on the target location after the specified time, which correspond to each of the vehicles 20.

For example, the vehicle guidance system 1 can be applied to a passenger transport system at an airport or an event site or to an automated vehicle driving system that moves a vehicle or another transport object to a specified target location. The vehicle guidance system 1 may be applied to an automatic valet parking (AVP) system. In this case, the vehicle locating device 50 executes control for guiding the vehicle 20 from a drop-off position of the vehicle 20 to a parking spot (the target location), which is set in a particular parking area, along the set basic route.

In the above embodiment, the description has been made on the example in which the vehicle locating device 50 is provided as the single device. However, the present invention is not limited to such an example. The vehicle locating device 50 may include plural devices, and the above-described functions of the vehicle locating device 50 may be distributed among the plural devices. For example, in the case where the vehicle guidance system 1 is applied to the AVP system, a server (a first device) in a high-order system may have functions of designating the parking spot according to various conditions and setting the basic route to the parking spot, and a server (a second device) in a low-order system may have functions of setting and sending control information on the vehicle 20 on the basis of the detection information of the detector 5 according to the basic route received from the high-order system.

### Reference Signs List

- 1:: Vehicle guidance system
- 5:: Detector
- 9:: Base station
- 20:: Vehicle
- 21:: Portion to be detected
- 30:: Vehicle controller
- 31:: Communication section
- 33:: Control information calculation section
- 50:: Information processor
- 51:: First communication section
- 52:: Second communication section
- 53:: Detection information processing section
- 55:: Vehicle control information setting section
- 56:: Storage section

## Claims

1. A vehicle locating system (1) comprising:
a portion (21) to be detected that is provided to a vehicle (20) and extends upward to a height at least exceeding a roof top;
a detector (5) that detects the portion (21) to be detected; and
a vehicle locating device (50) that identifies a location of the vehicle (20) on map data on the basis of detection information on the detected portion (21) to be detected.

2. The vehicle locating system according to claim 1, wherein
the vehicle locating device (50) identifies the location of the vehicle (20) on the map data by calculating a relative location of the detected portion (21) to be detected to a specified reference location.

3. The vehicle locating system according to claim 1 or 2, wherein
a shape of the portion (21) to be detected differs by a direction of view.

4. The vehicle locating system according to any one of claims 1 to 3, wherein
the detector (5) is a LiDAR device, and
reflectance of the portion (21) to be detected differs by the direction of view.

5. The vehicle locating system according to any one of claims 1 to 3, wherein
the detector (5) is an imaging camera, and
coloration of the portion (21) to be detected differs by the direction of view.

6. The vehicle locating system according to claim 1 or 2, wherein
the vehicle (20) includes a plurality of the portions (21) to be detected, and
a thickness, a height, or a shape of at least one portion (21) to be detected of the plural portions (21) to be detected differs.

7. The vehicle locating system according to claim 1 or 2, wherein
the vehicle (20) includes a plurality of the portions (21) to be detected, and
arrangement of the plural portions (21) to be detected forms a shape other than a perfect circle or an equilateral polygon.

8. The vehicle locating system according to any one of claims 3 to 7, wherein
the vehicle locating device (50) identifies the location and an orientation of the vehicle (20) on the basis of the detection information on the portion (21) to be detected.

9. A vehicle locating device (50) comprising:
a detection information processing section (53) that identifies a location of a vehicle (20) on map data on the basis of detection information acquired by detecting a portion (21) to be detected that is provided to the vehicle (20) and extends upward to a height at least exceeding a roof top.
